**Europäisches Patentamt**

**European Patent Office**

**Office européen des brevets**

(19)

(11) Veröffentlichungsnummer: **0 189 037 B1**

(12) **EUROPÄISCHE PATENTSCHRIFT**

(45) Veröffentlichungstag der Patentschrift:
04.10.89

(51) Int. Cl.⁴: **H02J 3/18, H02H 7/00**

(21) Anmeldenummer: **86100064.4**

(22) Anmeldetag: **03.01.86**

(54) **Statischer Blindleistungskompensator.**

(30) Priorität: **11.01.85 DE 3500786**

(43) Veröffentlichungstag der Anmeldung:
**30.07.86 Patentblatt 86/31**

(45) Bekanntmachung des Hinweises auf die Patenterteilung:
**04.10.89 Patentblatt 89/40**

(84) Benannte Vertragsstaaten:
**AT BE CH DE FR GB LI SE**

(56) Entgegenhaltungen:
**EP-A- 0 116 275**
**DE-A- 3 338 301**
**US-A- 4 470 005**

(73) Patentinhaber: **Siemens Aktiengesellschaft, Wittelsbacherplatz 2, D-8000 München 2(DE)**

(72) Erfinder: **Thiele, Gerd, Dipl.-Ing., Lessingstrasse 3b, D-8520 Erlangen(DE)**

ACTORUM AG

## Beschreibung

Die Erfindung betrifft einen statischen Blindleistungskompensator mit einer Reihenschaltung eines Kondensators, einer Schutzdrossel und eines Thyristorsschalters, wobei der Reihenschaltung von Schutzdrossel und Thyristorschalter ein erster Überspannungsableiter parallel geschaltet ist.

Blindleistungskompensatoren sind aus der Zeitschrift "Siemens-Energietechnik" 3 (1981), Seiten 353–357 und "Siemens-Energietechnik" 4 (1982), Seiten 34–39 bekannt. Bei solchen Blindleistungskompensatoren beteht die Gefahr, daß die Thyristoren des Thyristorschalters Stoßspannungen ausgesetzt sind, die über den Kondensator voll auf den Thyristorschalter durchgreifen. Außerdem können Fehlzündungen bei Phasenopposition zu großen Belastungen der Thyristoren führen.

Ein gattungsmäßiger Blindleistungskompensator ist aus der europäischen Patentanmeldung EP-A 0 116 275 bekannt. Bei diesem Blindleistungskompensator ist ein Blindleistungskondensator in Reihe mit einem aus antiparallelen Thyristoren aufgebauten Thyristorschalter geschaltet. Eine erste Steuereinheit erzeut für den Thyristorschalter aus Strom- und Spannungsmeßsignalen eines zu kompensierenden Wechselspannungsnetzes Zündimpulse. Dem Blindleistungskondensator ist ein Entladekreis parallel geschaltet, welcher als variablen Blindwiderstand eine mit einem Eisenkern versehene Entladekreis-Drossel aufweist. Durch die Sättigungseigenschaften des Eisenkerns wirkt die Entladekreis-Drossel im Entladekreis als variabler Blindwiderstand. Außerdem ist im Kreis mit dem Blindleistungskondensator und dem Thyristorschalter zur Begrenzung des Ventilstromes bei transienten Vorgängen eine Luftdrossel geschaltet. Parallel zu der Reihenschaltung aus Luftdrossel und Thyristorschalter ist ein erster Überspannungsableiter geschaltet und parallel zu dem Thyristorschalter ein zweiter Überspannungsableiter. Mit Hilfe des Entladekreises kann eine schnelle und kontinuierliche Entladung des Blindleistungskondensators nach dessen Abschalten vom Wechselspannungsnetz ohne irgendwelche störanfällige und teure Schaltelemente erfolgen. Dadurch ist der Thyristorschalter nur für eine einfache maximale Netzspannung zu bemessen.

Es besteht die Aufgabe, den Thyristorschalter eines Blindleistungskompensators der eingangs genannten Art gegen Überspannungen und Beanspruchungen bei Fehlzündungen zu schützen.

Erfindungsgemäß wird diese Aufgabe dadurch gelöst, daß dem Kondensator ein zweiter Überspannungsableiter parallel geschaltet ist.

Bei dem erfindungsgemäßen Blindleistungskompensator werden Überspannungen durch den ersten Überspannungsableiter begrenzt. Dabei wird der Strom, den der Überspannungsableiter beim Auftreten einer Überspannung führt und der mehrere Kiloampere betragen kann und der beim gleichzeitigen Zünden eines Thyristorventils auf dieses kommutiert für dieses ebenfalls begrenzt, da die Drossel in den Kommutierungskreis einbezogen ist. Mit dem zweiten Überspannungsableiter wird bei Fehlzündung eines Thyristorventils bei Phasenopposition beim Abschalten die Spannung am Thyristorventil und die Stromsteilheit wesentlich verkleinert.

Vorzugsweise gilt für die RC-Beschaltung des Thyristorschalters und für die Induktivität der Schutzdrossel:

$$\frac{R}{2\sqrt{\dfrac{L}{C}}} > 2$$

Damit ist die ohnehin vorhandene RC-Beschaltung der Thyristorventile in Bezug auf die Induktivität der Thyristorventile in Bezug auf die Induktivität der Schutzdrossel so ausgelegt, daß aperiodische Dämpfung herrscht, womit das Überschwingen der Thyristorspannung über di Ableiterspannung vernachlässigbar klein wird.

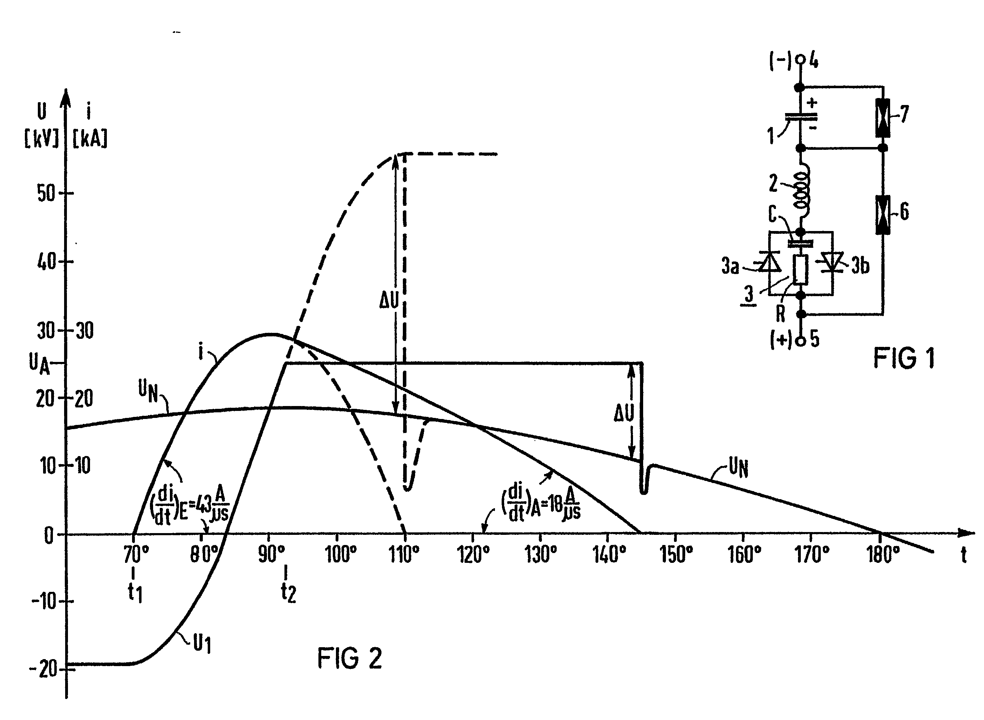

Im folgenden wird der erfindungsgemäß Blindleistungskompensator beispielhaft anhand der Figuren 1 und 2 näher erläutert.

Figur 1 zeigt schematisch das Schaltbild eines erfindungsgemäßen statischen Blindleistungskompensators. Die Reihenschaltung eineer Kondensatorbatterie 1, einer Schutzdrossel 2 und eines Thyristorschalters 3 ist über die Klemmen 4 und 5 mit dem zu beeinflussenden Netz verbunden. Der Thyristorschalter 3 ist mit Thyristorventilen 3a und 3b in Antiparallelschaltung realisiert. Die RC-Beschaltung der Thyristorventile 3a und 3b it mit dem Kondensator C und dem Widerstand R angedeutet, die zu den Thyristorventilen 3a und 3b paralleel geschaltet sind.

Ein erster Überspannungsableiter 6 ist zur Reihenschaltung der Schutzdrossel 2 und des Thyristorschalters 3 und ein zweiter Überspannungsableeiter 7 ist zum Kondensator 1 parallel geschaltet. Die Induktivität L der Schutzdrossel 2 ist so bemessen, daß das Verhältnis der Eigenfrequenz

$$\omega_0 = \frac{1}{\sqrt{LC}}$$

zur Betriebsfrequenz $\omega$ etwa

$$\frac{\omega_0}{\omega} > 4$$

beträgt.

Treten an den Klemmen 4 und 5 Überspannungen, beispielsweise Schaltstoßspannungen auf, so würden diese Überspannungen ohne Schutzmaßnahme über die Kapazität des Kondensators 1 voll auf den Thyristorschalter durchgreifen. Ein zwischen die Klemmen 4 und 6 geschaltete Überspannungsableiter kann die Übeerspannung am Thyristorschalter 3 nicht begrenzen, da dann die Spannung am Thyristorschalter 3 durch die Summe der Spannung am Kondensator 1 und der Ableiterspannung gegeben ist. Auch ein Überspannungsableiter, der nur parallel zum Thyristorschalter 3 geschaltet ist, wäre für den Schutz der Thyristorventile 3a und 3b wenig erfolgreich, da beim Auftreten einer Überspannung der Überspannungsableiter Strom bis zu mehreren kA führt, der beim gleichzeitigen Zünden eines Thyristorventiles ohne Begrenzung auf den Thyristorschalter 3 kommutieren würde. Bei der Ausgestaltung nach Figur 1 ist der Überspannungsableeiter 6 zur Reihenschaltung von Schutzdrossel 2 und Thyristorschalter 3 parallel geschaltet. Die Schutzdrossel 2 ist damit in den Kommutierungskreis einbezogen un begrenzt den Strom, der beim Auftreten einer Überspannung undd gleichzeitigem Zünen eines Thyristorventils auf den Thyristorschalteer 3 kommutiert. Zusätzlich kann man aperiodische Dämpfung im Kommutierungskreis erhalten, wenn man die RC-Beschaltung der Thyristorventile 3a und 3b in Bezug auf die Induktivität L der Drossel 2 entsprechend auslegt. Z. B. mit

$$\frac{R}{2\sqrt{\frac{L}{C}}} > 2$$

wird das Überschwingen der Thyristorspannung über die Ableiterspannung vernachlässigbar klein.

Bei einem Blindleistungskompensator gemäß Figur 1 kann ein weiterer Störungsfall dann auftreten, wenn der Thyristorschalter 3 nach einer gewissen Belastungszeit gesperrt wird. Es sei angenommen, daß dann der Kondensator 1 die in Figur 1 eingezeichnete Polarität besitzt. Nach einer Halbperiode der Netzspannung nach dem Sperren des Thyristorsschalter 3 ist die an den Klemmen 4 und 5 anstehende Netzspannung auf die in Klammern angegeben Polarität umgeschwungen. Tritt jetzt eine Fehlzündung eines der Thyristorventile auf, dann ist die Spannung $U_1$ am Kondensator 1 und die Netzspannung $U_N$ in Reihe geschaltet. Man bezeichnet dies als Fehlzündung bei Phasenopposition, eine solche Fehlzündung kann durch Störimpulse der Bauelementdefekte verursacht worden sein. Unter den gegebenen Voraussetzungen erhält man einen Umladestrom i des Kondensators 1:

$$i = \frac{U_1 + U_N}{\sqrt{L/C}} .$$

Die Stromsteilheit beim Einschalten und die Stromsteilheit beim Ausschalten betragen:

$$\left(\frac{di}{dt}\right)_E = \frac{U_1 + U_N}{L} \quad bzw. \quad \left(\frac{di}{dt}\right)_A = -\frac{U_1 + U_N}{L}$$

und die Stromflußzeit der Halbwelle beträgt:

$$\frac{T}{2} = \pi \cdot \sqrt{L \cdot C} .$$

Außerdem erhält man eine Sprungspannung am Thyristorschalter 3 nach dem Ausschalten von $\Delta U = -3 U_1 + U_N$ und di Sperrspannung am Thyristorschalter beträgt ungefähr eine Halbwelle später: $-3 U_1 - U_N$. Dabei können die entstehenden Kurzschlußstromamplituden und die Stromsteilheiten Werte bis zu ca. 30 kA und bis zu 50

$$\frac{A}{\mu s}$$

annehmen.

3

Mit dem Überspannungsableiter 7, der zum Kondensator 1 parallel geschaltet ist, wird die Spannung am Thyristorschalter 3 und die Stromsteilheit beim Ausschalten verkleinert. Weder die Amplitude des Umladestroms i noch die Stromsteilheit beim Einschalten lassen sich vernünftig weiter begrenzen, ohne die Wirkungsweise des Blindleistungskompensators unzulässig zu beeinflussen.

In Figur 2 ist die Kondensatorspannung $U_1$, die Netzspannung $U_N$ und der Umladestrom i des Kondensators 1 über der Zeit t (in ° el) aufgetragen, die man bei einer Fehlzündung eines Thyristorventils 3a oder 3b bei Phasenopposition erhält. Dabei ist mit gestrichelter Kurve der Verlauf bei einem Blindleistungskompensator gemäß Figur 1 ohne Übeerspannungsableiter 7 und mit ausgezogener Kurve der Verlauf bei einem Blindleistungskompensator dargestellt, bei dem dem Kondensator 1 ein Überspannungsableiter 7 parallel geschaltet ist. Im Zeitpunkt $t_1$ erfolgt eine Fehlzündung bei Phasenopposition und im Zeitpunkt $t_2$ greift der Überspannungsableiter 7 ein und begrenzt die Kondensatorspannung auf die Ableiterspannung $U_A$. Der Figur 2 ist zu entnehmen, daß man eine Verkleinerung der Stromsteilheeit

$$\left(\frac{di}{DT}\right)_A$$

und der Sprungspannung $\Delta U$ am Thyristorschalter 3 beim Ausschalten dadurch erhält, daß die Kondensatorspannung nicht auf den vollen Wert ($3\,U_1$) umschwingt, sondern daß sie bei ca. $1{,}3\,U_1$ begrenzt ist. Daraus resultiert zwar, daß der Stromfluß über den Thyristorschalter 3 verlängert wir, die Stromsteilheit

$$\left(\frac{di}{dt}\right)_A$$

beim Ausschalten ist jedoch um mehr als den Faktor 2 reduziert, was sich günstig auf die Bemessung der RC-Beschaltung des Thyristorschalters 3 und seine Ausschaltverluste auswirkt. Außerem wird die Sprungspannung bim Ausschalten auf weniger als $|-U_1|$ reeduziert und die eine Halbperiode später am Thyristor anstehende Sperrspannung beträgt $|-U_1-U_N|$.

## Patentansprüche

1. Statischer Blindleistungskompensator mit einer Reihenschaltung eines Kondensators (1), einer Schutzdrossel (2) und eines Thyristorschalters (3), wobei der Reihenschaltung von Schutzdrossel (2) und Thyristorschalter (3) ein erster Überspannungsableiter (6) parallel geschaltet ist, dadurch gekennzeichnet, daß dem Kondensator (1) ein zweiter Überspannungsableiter (7) parallel geschaltet ist.

2. Statischer Blindleistungskompensator nach Anspruch 1, dadurch gekennzeichnet, daß für die RC-Beschaltung des Thyristorstellers und für die Induktivität L der Drossel:

$$\frac{R}{2\sqrt{\frac{L}{C}}} > 2$$

gilt.

## Claims

1. Static reactive-power compensator with a series connection of a capacitor (1), a choke coil (2) and a thyristor switch (3), a first surge arrester (6) being connected in parallel with the series connection of the choke coil (2) and thyristor switch (3), characterised in that a second surge arrester (7) is connected in parallel with the capacitor (1).

2. Static reactive-power compensator according to claim 1, characterised in that

$$\frac{R}{2\sqrt{\frac{L}{C}}} > 2$$

applies to the RC circuit of the thyristor control element and the inductance L of the choke.

## Revendications

1. Compensateur statique de puissance réactive, comprenant le circuit en série d'un condensateur (1), d'une bobine de choc (2) et d'un interrupteur à thyristors (3), ainsi qu'un premier éclateur (6) branché en parallèle avec le montage en série de la bobine (2) et de l'interrupteur (3), caractérisé en ce qu'un second éclateur (7) est branché en parallèle sur le condensateur (1).

2. Compensateur selon la revendication 1, caractérisé en ce que le circuit RC combiné à interrupteur à thyristors et l'inductance L de la bobine satisfont à la formule:

$$\frac{R}{2\sqrt{\dfrac{L}{C}}} > 2$$

FIG 1

FIG 2

EP 0 189 037 B1